# EUROPEAN PATENT APPLICATION

(11) **EP 1 693 861 A1**
(43) Date of publication of application: **23.08.2006**
(21) Application number: 05728407.7
(22) Date of filing: 05.04.2005
(51) Int. Cl.: H01F 17/00, H01F 27/00, H01F 41/04, H01G 4/12

(54) **CERAMIC ELECTRONIC PARTS AND METHOD FOR MANUFACTURING CERAMIC ELECTRONIC PARTS**

(30) Priority: 08.04.2004 JP 2004114824
(71) Applicant: MURATA MANUFACTURING CO., LTD., Nagaokakyo-shi, Kyoto 617-8555 (JP)
(72) Inventor: KAWABATA, Ryohei, Murata Manufacturing Co., LTD., Nagaokakyo-shi, Kyoto 6178555 (JP); MAEDA, Eiichi, Murata Manufacturing Co., LTD., Nagaokakyo-shi, Kyoto 6178555 (JP); IMADA, Katsuhisa, Murata Manufacturing Co., LTD., Nagaokakyo-shi, Kyoto 6178555 (JP); KUMAGAI, Akinobu, Murata Manufacturing Co., LTD:, Nagaokakyo-shi, Kyoto 6178555 (JP); KAWADA, Yuzo, Murata Manufacturing Co., LTD., Nagaokakyo-shi, Kyoto 6178555 (JP); SAKAI, Nobuyuki, Murata Manufacturing Co., LTD., Nagaokakyo-shi, Kyoto 6178555 (JP); FUKUDA, Yutaka, Murata Manufacturing Co., LTD., Nagaokakyo-shi, Kyoto 6178555 (JP); TSUKIZAWA, Takayuki, Murata Manuf. Co., LTD., Nagaokakyo-shi, Kyoto 6178555 (JP)
(74) Representative: Zinnecker, Armin
(86) International application number: PCT/JP2005/006642
(87) International publication number: WO 2005/098879

(57) **Abstract**

The present invention relates to a ceramic electronic component and a process for producing the same. A borosilicate glass is mixed with a ceramic composition containing 10 to 14 percent by weight of Al₂O₃ to form a mixture such that the mixture contains 60 to 74 percent by weight of the borosilicate glass and 24 to 60 percent by weight of the ceramic composition. A ceramic body 1 is formed from the mixture, the ceramic body 1 including internal-electrode group 5 therein. The ceramic composition preferably contains 4.0 to 70.0 percent by weight of a Si constituent in terms of SiO₂ and 4.0 to 40.0 percent by weight of a Ba constituent in terms of BaO. The ceramic body 1 preferably contains 0.5 to 3 percent by weight of a colorant, such as a chromium oxide, with respect to the borosilicate glass. Thereby, it is possible to increase the mechanical strength of the ceramic body 1 without the deterioration in low-temperature sinterability and electrical properties and to quickly and precisely perform a product inspection.

## Description

### Technical Field

The present invention relates to ceramic electronic components and processes for producing the ceramic electronic components. In particular, the present invention relates to a ceramic electronic component including a ceramic body having an internal electrode therein, for example, a multilayer coil component, a transformer, or an LC filter, and a process for producing the ceramic electronic component.

### Background Art

In recent years, there have been advances in the reduction in size and profile of electronic components with the decrease in size and profile of electronics. In such electronic components, multilayer ceramic substrates suitable for the reduction in size and profile have been widely used.

A known multilayer ceramic substrate is produced by a process as disclosed in Patent Document 1 described below.

That is, conductive patterns to be internal electrodes are formed by screen printing or the like on a surface of individual ceramic green sheets (hereinafter, simply referred to as "ceramic sheets"). The ceramic sheets having the conductive patterns are disposed between ceramic sheets not having the conductive patterns and then press-bonded. The ceramic sheets and the conductive patterns are simultaneously fired to form a ceramic body having the internal electrodes therein. A Ag paste is applied to outer surfaces of the ceramic body, baked, and covered with plating films to form external electrodes. Thereby, the multilayer ceramic substrate is produced.

### Patent Document 1: Japanese Unexamined Patent Application Publication No. 2003-282332

### Disclosure of Invention

### Problems to be Solved by the Invention

However, when the plating films are formed on the external electrodes of the electronic component, the electronic component is required to be immersed in a plating solution. The ceramic body disadvantageously erodes by penetration of the plating solution into the inside of the component, thus degrading the mechanical strength of the electronic component.

Furthermore, the ceramic sheets are required to have smaller thicknesses with a reduction in profile of the electronic component. When such ceramic sheets having smaller thicknesses are laminated and press-bonded, a failure, such as a fracture, a defect, or a crack, in the ceramic sheets disadvantageously occurs, thereby degrading the electrical properties and the mechanical strength of the electronic component.

Furthermore, the fracture, the defect, the crack, or the like in the electronic component is determined by visual examination with an optical microscope or the like after the production of the electronic component. However, in the ceramic body, the ceramic sheets are transparent; hence, it is difficult to determine whether the internal electrode is exposed because of the occurrence of the failure or the like in the ceramic sheet or the internal electrode is seen through the transparent outer ceramic sheets. Therefore, disadvantageously, the discrimination between a non-defective product and a defective product cannot be achieved quickly or precisely.

In consideration of such situations, the present invention was accomplished. It is an object of the present invention to provide a ceramic electronic component and a process for producing the ceramic electronic component, wherein the deterioration in mechanical strength can be prevented without impairment of the low-temperature sinterability and the electrical properties, and it is possible to quickly and precisely discriminate between a non-defective product and a defective product.

### Means for Solving the Problems

To achieve the above-described object, the inventors have conducted intensive studies and found that, by forming a ceramic body from a ceramic material including 60 to 76 percent by weight of a borosilicate glass and 24 to 40 percent by weight of ceramic composition, the borosilicate glass containing 10 to 14 percent by weight of Al in terms of Al₂O₃, Al having large flexural strength, it is possible to produce a ceramic electronic component, such as a multilayer coil component, having satisfactory flexural strength after plating, wherein the deterioration in mechanical strength can be prevented without impairment of the electrical properties, such as a dielectric constant and insulation resistance, and the low-temperature sinterability.

The present invention was accomplished on the basis of the findings. In a ceramic electronic component according to the present invention, the ceramic electronic component includes an external electrode on an external surface of a ceramic body, the ceramic body containing 24 to 40 percent by weight of a ceramic composition and 60 to 76 percent by weight of a borosilicate glass, and the ceramic composition containing 10 to 14 percent by weight of an Al constituent in terms of Al₂O₃.

To ensure more satisfactory electrical properties and low-temperature sinterability, preferably, the ceramic composition further contains 4.0 to 70.0 percent by weight of a Si constituent in terms of SiO₂ and 4.0 to 40.0 percent by weight of a Ba constituent in terms of BaO.

That is, in the ceramic electronic component of the present invention, the ceramic composition contains 4.0 to 70.0 percent by weight of a Si constituent in terms of SiO₂ and 4.0 to 40.0 percent by weight of a Ba constituent in terms of BaO.

Furthermore, the inventors have conducted intensive studies in order to quickly and precisely discriminate between a non-defective product and a defective product in a production inspection and found that, by adding 0.50% to 3.00% of a colorant to the ceramic body with respect to the borosilicate glass, the transparency of the ceramic sheet is reduced, thus improving the rate of discrimination between the non-defective product and the defective product.

In the ceramic electronic component of the present invention, the ceramic body further contains 0.5 to 3 percent by weight of a colorant, such as a chromium oxide, with respect to the borosilicate glass.

A process for producing a ceramic electronic component in accordance with the present invention includes the steps of mixing a ceramic composition containing 10 to 14 percent by weight of an Al constituent in terms of Al₂O₃ with a borosilicate glass so as to prepare a ceramic premix containing 24 to 40 percent by weight of the ceramic composition and 60 to 76 percent by weight of the borosilicate glass; forming the ceramic premix into ceramic green sheets; forming a conductive pattern on at least one of the ceramic green sheets; laminating the ceramic green sheets to form a ceramic laminate; firing the ceramic laminate to form a ceramic body; and forming an external electrode on an external surface of the ceramic body.

Furthermore, in the process for producing the ceramic electronic component, the ceramic composition is prepared so as to contain 4.0 to 70.0 percent by weight of a Si constituent in terms of SiO₂ and 4.0 to 40.0 percent by weight of a Ba constituent in terms of BaO. Moreover, the process further includes a step of adding 0.5 to 3 percent by weight of a colorant, such as a chromium oxide, to each ceramic green sheet with respect to the borosilicate glass. Advantages

According to a ceramic electronic component of the present invention, the ceramic electronic component includes an external electrode on an external surface of a ceramic body. The ceramic body contains 24 to 40 percent by weight of a ceramic composition and 60 to 76 percent by weight of a borosilicate glass, the ceramic composition containing 10 to 14 percent by weight of an Al constituent in terms of Al₂O₃. Thus, a deterioration in flexural strength can be prevented without impairment of the low-temperature sinterability. Consequently, it is possible to produce the ceramic electronic component having sufficient mechanical strength without a failure, such as a fracture, a defect, or a crack, in a production process.

Furthermore, the ceramic composition contains 4.0 to 70.0 percent by weight of a Si constituent in terms of SiO₂ and 4.0 to 40.0 percent by weight of a Ba constituent in terms of BaO. Thus, the deterioration in mechanical strength can be prevented. Consequently, it is possible to produce the ceramic electronic component having sufficient electrical properties, such as a dielectric constant and insulation resistance, and low-temperature sinterability.

In the ceramic electronic component of the present invention, the ceramic body contains 0.5 to 3 percent by weight of a colorant, such as a chromium oxide, with respect to the borosilicate glass. Thus, the external surface of the ceramic body was stained, thereby reducing the transparency. Therefore, it is possible to easily discriminate between the presence and absence of the exposed internal electrode when the electronic component is observed from the exterior.

Furthermore, according to the process for producing the ceramic electronic component of the present invention, it is possible to easily produce a small, low-profile ceramic electronic component having high flexural strength with ease of inspection.

### Brief Description of the Drawings

Fig. 1 is a schematic cross-sectional view of a multilayer inductor in accordance with a first embodiment of the present invention.
Fig. 2 is a schematic perspective view showing a process for producing the multilayer inductor.
Fig. 3 is a schematic cross-sectional view of a multilayer inductor in accordance with a second embodiment of the present invention.

### Reference Numerals

1 ceramic body
2a, 2b, 9a, 9b external electrode
5, 12 internal electrode

### Best Mode for Carrying Out the Invention

Embodiments of the present invention will be described in detail below.

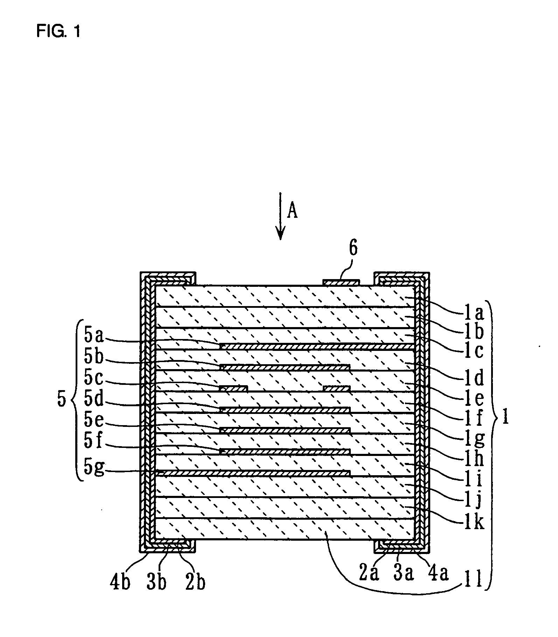

Fig. 1 is a schematic cross-sectional view of a multilayer inductor in accordance with a first embodiment of the present invention.

The multilayer inductor includes a ceramic body 1 formed of a plurality of ceramic sheets 1a to 11, the ceramic sheets being laminated. The ceramic body 1 includes external electrodes 2a and 2b at both ends thereof. First plating films 3a and 3b are disposed on the surfaces of the external electrodes 2a and 2b. Second plating films 4a and 4b are disposed on the first plating films 3a and 3b.

Specifically, the ceramic body 1 includes inner ceramic sheets 1d to 1j; internal electrodes 5a to 5g each having a predetermined pattern, the internal electrodes 5a to 5g being disposed on the surfaces of the respective inner ceramic sheets 1d to 1j; and outer sheets 1a to 1c and 1k and 11 not having internal electrodes, the inner ceramic sheets being disposed between the outer sheets. The internal electrode 5a is electrically connected to the external electrode 2a. The internal electrode 5g is connected to the external electrode 2b. The internal electrodes 5a to 5g are electrically connected in series with via holes (not shown) to form a coil.

A marked portion 6 is disposed at a predetermined portion of the upper surface of the ceramic body 1. The marked portion 6 is formed by applying and baking a marking paste described below. The marked portion 6 is provided to indicate the direction of magnetic lines of force generated by applying direct current to the internal electrodes 5a to 5g. For example, in the case where the inductors are connected in series, if an interaction, such as coupling or decoupling, between the inductors occurs, the marked portion 6 is useful for the evaluation and control of the combined inductance.

In this embodiment, the ceramic sheets 1a to 11 each contain a borosilicate glass mainly composed of SiO₂ and B₂O₃; and a Ba-Al-Si-O ceramic composition (hereinafter, simply referred to as a "ceramic composition") mainly composed of SiO₂, BaO, and Al₂O₃.

Specifically, the ceramic sheets each contain 60 to 76 percent by weight of the borosilicate glass and 24 to 40 percent by weight of the ceramic composition, the ceramic composition containing 10 to 14 percent by weight of Al₂O₃.

Contents of the borosilicate glass and the ceramic composition are limited to the above range for the following reasons.

In this embodiment, the ceramic body 1 contains the borosilicate glass so as to sinter at low temperatures. When the borosilicate glass content is less than 60 percent by weight, the borosilicate glass does not have the effect of reducing the sintering temperature to a target temperature. Thus, it is necessary to increase the firing temperature. On the other hand, when the borosilicate glass content exceeds 76 percent by weight, the flexural strength is reduced after the formation of the plating films on the external electrodes. Furthermore, the flexural strength is significantly degraded before and after plating, thereby not achieving a target mechanical strength.

Accordingly, in this embodiment, the ceramic body 1 contains 60 to 76 percent by weight of the borosilicate glass.

The Al₂O₃ content in the ceramic composition is set in the range of 10 to 14 percent by weight for the following reasons.

When the Al₂O₃ content in the ceramic composition is less than 10 percent by weight, the flexural strength is reduced after the formation of the plating films on the external electrodes. Furthermore, the flexural strength is significantly degraded before and after plating, thereby not achieving a target mechanical strength. On the other hand, when the Al₂O₃ content in the ceramic composition exceeds 14 percent by weight, the sinterability is degraded. Therefore, the ceramic body 1 is not sufficiently densified, thus reducing the flexural strength after the formation of the plating films. Furthermore, the flexural strength is significantly degraded before and after plating.

Accordingly, in this embodiment, the Al₂O₃ content in the ceramic composition is set in the range of 10 to 14 percent by weight.

The ceramic composition contains BaO and SiO₂ that are main constituents in addition to Al₂O₃. If necessary, the ceramic composition further contains Cr₂O₃, CaCO₃, and B₂O₃. From the standpoint of ensuring the electrical properties and the low-temperature sinterability, the SiO₂ content in the ceramic composition is preferably in the range of 4.0 to 70.0 percent by weight, and the BaO content in the ceramic composition is preferably in the range of 4.0 to 40.0 percent by weight.

When the SiO₂ content in the ceramic composition is less than 4.0 percent by weight, the dielectric constant is increased. Thus, circuit properties may be degraded at high frequencies, thereby degrading the electrical properties. When the SiO₂ content in the ceramic composition exceeds 70.0 percent by weight, the firing temperature may exceed 900°C, thereby not ensuring the low-temperature sinterability.

When the BaO content in the ceramic composition is less than 4.0 percent by weight, the flexural strength is reduced. Furthermore, the firing temperature may exceed 900°C, thus not ensuring the low-temperature sinterability. When the BaO content in the ceramic composition exceeds 40.0 percent by weight, the dielectric constant is increased. As a result, the electrical properties may be degraded.

The composition of the borosilicate glass is not particularly limited. For example, a borosilicate glass containing 17.0 to 21.0 percent by weight of B₂O₃, 1.0 to 3.0 percent by weight of K₂O, and SiO₂ constituting the remainder may be used.

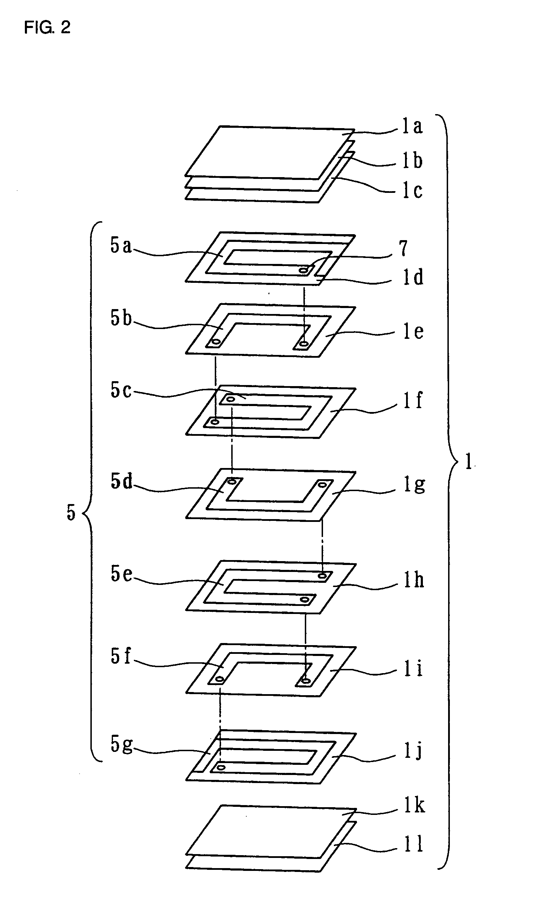

A process for producing the multilayer inductor will be described with reference to Fig. 2 showing a schematic perspective view.

Predetermined ceramic starting materials are measured such that the Al₂O₃ content is 10 to 14 percent by weight. The materials are mixed and pulverized by a wet process. The resulting premix is dried and calcined to produce a calcined powder.

The calcined powder and a borosilicate glass are mixed to form a mixture such that the mixture contains 24 to 40 percent by weight of the ceramic composition and 60 to 76 percent by weight of the borosilicate glass.

Preferably, the calcined powder and the borosilicate glass each have an average particle size of 1.0 to 3.5 µm. At an average particle size of 1.0 to 3.5 µm, pin holes in the fired ceramic sheets are reduced. As a result, for example, a short circuit between the internal electrodes 5a to 5g in the ceramic body 1 does not occur. Furthermore, the sintered density is improved, thus increasing the flexural strength after firing.

Water, an organic solvent, a binder, and the like are added to the mixture. The resulting mixture is kneaded to form a ceramic slurry. The ceramic slurry is formed into the ceramic sheets 1a to 11 by a forming process, such as a doctor blade method.

A conductive paste is prepared by mixing Ag or a Ag alloy, such as Ag-Pd, with an organic vehicle, the conductive paste having a predetermined viscosity. As shown in Fig. 2, the conductive paste is applied to the surfaces of the inner ceramic sheets 1d to 1j by screen printing to form the internal electrodes 5a to 5g. Then, via holes 7 are formed in predetermined portions of the internal electrodes 5a to 5f.

The organic vehicle contained in the conductive paste is not particularly limited. A solution of ethyl cellulose in α-terpineol or a solution of a butyral resin or a acrylic resin in a predetermined organic solvent may be used.

A borosilicate glass, a predetermined amount of a ceramic composition relative to the borosilicate glass, a complex compound containing Cu, Cr, and Mn, and the organic vehicle are mixed, pulverized, and dispersed to form a marking paste. The marking paste is applied to a predetermined portion on the surface of the ceramic sheet 1a by screen printing to form the marked portion 6. With respect to the method for forming the internal electrodes 5a to 5f and the method for forming the marked portion, any method, such as application, evaporation, or sputtering, may be employed in addition to screen printing.

The inner ceramic sheets 1d to 1j are placed between the outer sheets 1a to 1c and 1k and 1l and press-bonded to form a laminate. In the laminate, the internal electrodes 5a to 5g are electrically connected in series with the via holes 7 to form a coil.

The laminate is cut into pieces each having predetermined dimensions. The pieces are subjected to binder-removing treatment at 500°C in a mixed gas atmosphere of air and N₂. Then, the resulting pieces are fired for a predetermined time at 850°C to 900°C in an air atmosphere and deburred by barrel polishing to produce ceramic bodies 1.

A paste for an external electrode and mainly composed of Ag is applied to both ends of the ceramic body 1. Baking treatment is performed at 820°C to 890°C for 20 to 100 minutes, and then barrel polishing for smoothing is performed to form the external electrodes 2a and 2b. The ceramic body 1 having the external electrodes 2a and 2b is immersed in a first plating solution, such as Ni plating solution, and subjected to electroplating with the ceramic body 1 as an cathode and an insoluble metal, such as Pt-coated Ti plate, as an anode to form the first plating films 3a and 3b. Next, the resulting ceramic body is immersed in a second plating solution, such as a Sn plating solution or a solder plating solution, and subjected to electroplating in the same way as for the first plating films to form the second plating films 4a and 4b. Thereby, the multilayer inductor is produced.

In this embodiment described above, the ceramic body 1 contains 24 to 40 percent by weight of the ceramic composition and 60 to 76 percent by weight of the borosilicate glass, the ceramic composition containing 10 to 14 percent by weight of Al in terms of Al₂O₃. Preferably, the ceramic composition contains 4.0 to 70.0 percent by weight of a Si constituent in terms of SiO₂ and 4.0 to 40.0 percent by weight of a Ba constituent in terms of BaO. Thus, a reduction in flexural strength can be prevented. Therefore, the mechanical strength can be ensured without the occurrence of a fracture, a defect, a crack, or the like in lamination and press bonding of the ceramic sheets. Furthermore, the electrical properties and the low-temperature sinterability cannot be impaired. Consequently, it is possible to produce a target multilayer inductor having high reliability.

The present invention is not limited to the embodiment. The ceramic body 1 may further contain a predetermined colorant. After the production of the multilayer inductor, the multilayer inductor is observed along an arrow A in Fig. 1 with an optical microscope to examine whether the internal electrodes 5a to 5g are exposed on the surface of the ceramic body 1 because of a failure, such as a fracture, a defect, or a crack, in the ceramic body 1. Then, it is necessary to determine a product having the exposure of the internal electrode as a defective product.

However, when the ceramic body 1 consists of the borosilicate glass and the ceramic composition and has a small thickness due to a small number of outer sheets, in some cases, it is difficult to determine whether the internal electrode is exposed at the surface due to the failure or the like in the ceramic body 1 or the internal electrode is seen through the transparent ceramic sheets as if the internal electrode is exposed at the surface. Therefore, in order to easily discriminate between a non-defective product and a defective product, the ceramic body 1 preferably contains a colorant. Specifically, the ceramic sheets 1a to 1l each contain 0.5 to 3 percent by weight of Cr₂O₃ relative to the borosilicate glass to easily determine whether the internal electrodes 5a to 5g are exposed at the surface of the ceramic body 1 or not.

The reasons for the limitation of the Cr₂O₃ content are described below. A Cr₂O₃ content of less than 0.5 percent by weight does not show the effect of the colorant. At a Cr₂O₃ content exceeding 3.0 percent by weight, even if the borosilicate glass content in the ceramic body is in the range of 60 to 76 percent by weight, the dielectric constant may be increased in the vicinity of the lower limit to degrade the electrical properties; and the flexural strength may be reduced in the vicinity of the upper limit to degrade the mechanical strength of the multilayer inductor.

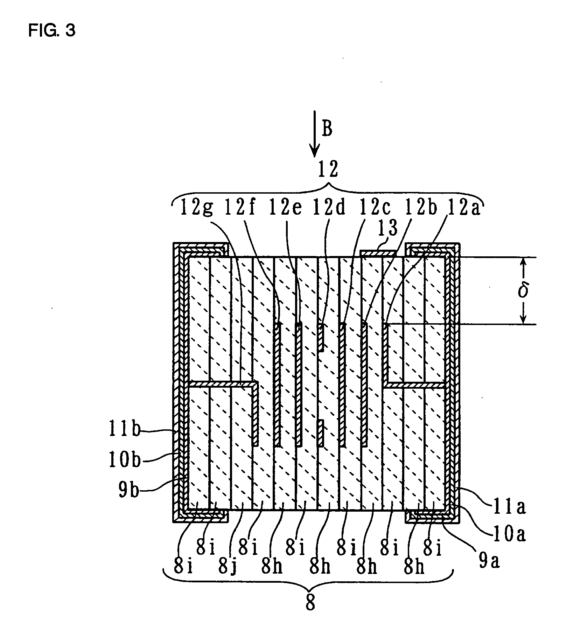

Fig. 3 is a schematic cross-sectional view of a ceramic electronic component in accordance with a second embodiment of the present invention.

In this embodiment, the axis of the coil is disposed perpendicular to external electrodes 9a and 9b. That is, in the multilayer inductor shown in Fig. 3, a ceramic body 8 includes inner ceramic sheets 8d to 8j; internal electrodes 12a to 12g each having a predetermined pattern, the internal electrodes 12a to 12g being disposed on the surfaces of the respective inner ceramic sheets 8d to 8j; and inner ceramic sheets 8a to 8c and 8k and 8l not having internal electrodes. The internal electrodes 12a to 12g are electrically connected in series with via holes to form a coil. The external electrodes 9a and 9b are formed by baking a paste mainly composed of Ag. First plating films 10a and 10b and second plating films 11a and 11b cover the external electrodes 9a and 9b. A marked portion 13 is disposed at a predetermined portion of the upper surface of the ceramic body 1.

In this embodiment, in the same way as in the first embodiment, to quickly and smoothly perform a production inspection, preferably, the ceramic sheets 8a to 81 each contain 0.5 to 3 percent by weight of Cr₂O₃ with respect to the borosilicate glass.

In this embodiment, a visual examination is performed along arrow B with an optical microscope. When the distance δ (side gap) between the ceramic body 8 and individual internal electrodes 12a to 12g is small, in some cases, it is difficult to determine whether the internal electrodes 12a to 12g are exposed at the surface or not.

Therefore, preferably, the ceramic sheets each contain Cr₂O₃ in the range described above to easily determine whether the presence or absence of the exposure of the internal electrode at the surface.

EXAMPLES of the present invention will be described in detail below.

### EXAMPLE 1

A borosilicate glass having an average particle size of 1.0 to 3.5 µm and consisting of 2.38% by weight of B₂O₃ and SiO₂ constituting the remainder was prepared. The calcined powder of a Ba-Al-Si-O ceramic composition (hereinafter, referred to as a "ceramic composition") having an average particle size of 1.0 to 3.5 µm and consisting of 11.6% by weight of Al₂O₃, 29.24% by weight of BaO, 0.48% by weight of CaO, and SiO₂ constituting the remainder was also prepared. These were mixed. The content of the borosilicate glass was adjusted to 60 to 74 percent by weight with respect to the total weight of the borosilicate glass and the ceramic composition.

Next, water, an organic solvent, and an organic vehicle such as a binder were added to the mixed material. The resulting mixture was kneaded to form a slurry. The resulting slurry was transferred onto a carrier film to produce ceramic sheets.

Ag or a Ag alloy, such as Ag-Pd, and an organic vehicle were mixed to prepare a conductive paste having a predetermined viscosity. The resulting conductive paste was applied to the surfaces of inner ceramic sheets by screen printing to form conductive patterns for internal electrodes. Furthermore, via holes were formed in predetermined portions of the conductive patterns.

A borosilicate glass, a predetermined amount of a ceramic composition relative to the borosilicate glass, a complex compound containing Cu, Cr, and Mn, and an organic vehicle were mixed, pulverized, and dispersed to form a marking paste. The resulting marking paste was applied to a predetermined portion on the surface of a ceramic sheet by screen printing to form a marked portion.

The inner ceramic sheets were placed between outer sheets and press-bonded to form a laminate. The resulting laminate was cut into pieces each having predetermined dimensions. The pieces were subjected to binder-removing treatment at 500°C in a mixed gas atmosphere of air and N₂. Then, the resulting pieces were fired for a predetermined time at 850°C to 900°C in an air atmosphere and deburred by barrel polishing to produce ceramic bodies.

A paste for an external electrode and mainly composed of Ag was applied to both ends of the ceramic body 1. Baking treatment was performed at 820°C to 890°C for 20 to 100 minutes, and then barrel polishing for smoothing was performed to form the external electrodes 2a and 2b. The ceramic body having the external electrodes was immersed in a Ni plating solution and subjected to electroplating with the ceramic body as a cathode and an insoluble metal, such as Pt-coated Ti plate, as an anode to form a Ni film. Next, the resulting ceramic body was immersed in a Sn plating solution and subjected to electroplating in the same way as above to form a Sn film. In this way, multilayer inductors in EXAMPLES 1 to 3 and COMPARATIVE EXAMPLES 1 and 2 were produced.

A dielectric constant ε, insulation resistance (IR), and flexural strength were measured. The rate of change in flexural strength before and after the formation of the plating films was calculated.

The dielectric constant ε was measured at 25°C and 100 MHz with an RF impedance/material analyzer (HP4291A, manufactured by Hewlett-Packard Development Company).

The insulation resistance (IR) was measured with an ultrahigh resistance/micro current meter (R8340A, manufactured by Advantest Corporation) by application of a DC voltage of 50V for 2 minutes at 25°C.

Measurement of the flexural strength was performed with a three-point bending type flexural strength tester (RTC1225A, manufactured by Orientec Co., Ltd.), and then the flexural strength was calculated in accordance with JIS R1601.

Table 1 shows compositions of test pieces and the measurement results.

**Table 1**

| | | Composition of ceramic body | | | Measurement result | | | | |
|---|---|---|---|---|---|---|---|---|---|
| | | Borosilicate glass (wt%) | Ceramic composition (wt%) | Al₂O₃ in ceramic composition (wt%) | Flexural strength after plating (N) | Rate of change in flexural strength (%) | Dielectric constant ε (-) | Insulation resistance IR (Ω·m) | Firing temperature (°C) |
| EXAMPLE | 1 | 66 | 34 | 10.0 | 25.8 | -9.5 | 4.42 | 1.88 × 10⁹ | 870 |
| | 2 | 66 | 34 | 11.6 | 26.3 | -6.2 | 4.50 | 1.95 × 10⁹ | 870 |
| | 3 | 66 | 34 | 14.0 | 27.8 | -1.8 | 4.66 | 2.25 × 10⁹ | 870 |
| COMPARATIVE EXAMPLE | 1 | 66 | 34 | 6.0 | 22.1 | -25.4 | 4.28 | 1.49 × 10⁹ | 870 |
| | 2 | 66 | 34 | 16.0 | 24.2 | -19.8 | 4.79 | 2.29 × 10⁹ | 870 |

In COMPARATIVE EXAMPLE 1, a multilayer inductor having a low Al₂O₃ content of 6 percent by weight in the ceramic composition had low flexural strength after the formation of the plating films on the external electrodes. The rate of change in flexural strength before and after the formation of the plating films was as high as 25% or more.

In COMPARATIVE EXAMPLE 2, a multilayer inductor had a large Al₂O₃ content of 16 percent by weight in the ceramic composition and thus was not sufficiently densified because of poor sinterability, thereby resulting in low flexural strength and a large rate of change in flexural strength.

In contrast, in each of EXAMPLES 1 to 3, it was found that since the Al₂O₃ content in ceramic composition was 10 to 14 percent by weight and was within the range of the present invention, the flexural strength was 25 N or more; the rate of change in flexural strength before and after the formation of the plating films on the external electrodes was as low as 15% or less; the insulation resistance (IR) was sufficient; and the dielectric constant ε was as low as less than 4.70; hence, sufficient mechanical strength and sufficient electrical properties can be achieved. Furthermore, it was also confirmed that sintering can be achieved at temperatures as low as 900°C or less.

### EXAMPLE 2

Multilayer inductors were produced in the same method and procedure as those in EXAMPLE 1 except that each Al₂O₃ content in the ceramic composition was adjusted to 11.6 percent by weight, the Al₂O₃ content being within the range of the present invention, and the ceramic composition and the borosilicate glass were mixed in different ratios. A dielectric constant ε, insulation resistance (IR), and the rate of change in flexural strength before and after plating on the external electrodes were measured. Table 2 shows the results.

**Table 2**

| | | Composition of ceramic body | | | Measurement result | | | | |
|---|---|---|---|---|---|---|---|---|---|
| | | Borosilicate glass (wt%) | Ceramic composition (wt%) | Al₂O₃ in ceramic composition (wt%) | Flexural strength after plating (N) | Rate of change in flexural strength (%) | Dielectric constant ε (-) | Insulation resistance IR (Ω·m) | Firing temperature (°C) |
| EXAMPLE | 11 | 76 | 24 | 11.6 | 22.5 | -9.2 | 4.36 | 7.94 × 10⁶ | 850 |
| | 12 | 72 | 28 | 11.6 | 23.4 | -7.8 | 4.42 | 2.51 × 10⁷ | 850 |
| | 13 | 70 | 30 | 11.6 | 24.8 | -7.2 | 4.45 | 5.01 × 10⁷ | 870 |
| | 14 | 68 | 32 | 11.6 | 24.9 | -6.7 | 4.47 | 1.58 × 10⁸ | 870 |
| | 15 | 66 | 34 | 11.6 | 26.3 | -6.2 | 4.50 | 1.95 × 10⁹ | 870 |
| | 16 | 64 | 36 | 11.6 | 26.5 | -5.7 | 4.54 | 7.08 × 10⁹ | 880 |
| | 17 | 63 | 38 | 11.6 | 27.8 | -5.2 | 4.58 | 3.98 × 10¹⁰ | 880 |
| | 18 | 60 | 40 | 11.6 | 28.3 | -4.7 | 4.65 | 3.02 × 10¹² | 900 |
| COMPARATIVE EXAMPLE | 11 | 80 | 20 | 11.6 | 20.9 | -10.8 | 4.28 | 7.94 × 10⁵ | 840 |
| | 12 | 78 | 22 | 11.6 | 21.4 | -10.0 | 4.33 | 3.16 × 10⁶ | 840 |
| | 13 | 58 | 42 | 11.6 | 29.8 | -4.3 | 4.75 | 9.77 × 10¹³ | 910 |
| | 14 | 56 | 44 | 11.6 | 30.4 | -4.0 | 4.90 | 2.51 × 10¹⁵ | 920 |

As is apparent from Table 2, in each of COMPARATIVE EXAMPLES 11 and 12, it was found that the flexural strength was about 20 N because of an excessive content of the borosilicate glass, i.e., the mechanical strength decreased. Furthermore, it was also found that the insulation resistance (IR) was small.

In COMPARATIVE EXAMPLES 13 and 14, it was found that although sufficient flexural strength and sufficient insulation resistance (IR) were achieved, since the ceramic bodies in COMPARATIVE EXAMPLES 13 and 14 have small borosilicate glass contents of 58 percent by weight and 56 percent by weight, respectively, which were less than 60 percent by weight, the respective firing temperatures were 910°C and 920°C, i.e., the temperature exceeded 900°C; hence, low-temperature sinterability was poor. Furthermore, it was confirmed that the dielectric constants ε were each above 4.75; hence, an electronic circuit had poor properties at high frequencies.

In contrast, in each of EXAMPLES 11 to 18, the borosilicate glass content was 60 to 74 percent by weight, which was within the range of the present invention. It was found that the dielectric constant was as low as less than 4.75; and the insulation resistance (IR) was high. Furthermore, it was also found that the flexural strength was as high as 22.5 N or more after plating; and the rate of change in flexural strength before and after formation of the plating films was less than 10%; hence, a decrease in the flexural strength of the multilayer inductor due to erosion by the plating solution can be prevented.

It was confirmed that when the Al₂O₃ content in the ceramic composition was 10 percent by weight at a borosilicate glass content of 76 percent by weight in the ceramic body, the rate of change in flexural strength before and after the formation of the plating films was 13.5%, which was less than 15%; hence, a deterioration in mechanical strength before and after plating was small. Furthermore, it was also confirmed that when the Al₂O₃ content in the ceramic composition was 14 percent by weight at a borosilicate glass content of 60 percent by weight in the ceramic body, the dielectric constant was increased to 4.73, which was less than 4.75; hence, a deterioration in electrical properties was small.

Consequently, it was found that the multilayer inductor having satisfactory electrical properties and satisfactory mechanical strength can be produced and low-temperature sintering can be achieved at temperatures as low as 900°C or less.

### EXAMPLE 3

A multilayer inductor was produced in the same method and procedure as those in EXAMPLE 1 except that the Al₂O₃ content in the ceramic composition was 11.6 percent by weight and the ceramic sheets containing a predetermined amount of Cr₂O₃ were used. A visual examination and property evaluation were performed.

The visual examination was performed with a CCD camera disposed above the outer sheet and evaluated on the basis of the brightness level difference in which the difference in brightness levels between a portion where the internal electrode was disposed and a portion where the internal electrode was not disposed was expressed as potential difference.

When Cr₂O₃ was not contained, the internal electrode was seen through the outer sheet. Thus, the brightness level difference was large even when the internal electrode was not exposed. As a result, a defective product could not be identified by the examination. However, the outer sheet was stained with increasing the amount of Cr₂O₃ added, thereby reducing the brightness level difference. As a result, a defective product could be identified by the examination.

It was found that when the Cr₂O₃ content exceeded 3 percent by weight at a borosilicate glass content of about 60 percent by weight, the dielectric constant exceeded 4.70, thereby degrading the electrical properties. It was also found that when the borosilicate glass content was about 74 percent by weight, the flexural strength was reduced, thereby reducing the mechanical strength of the multilayer inductor.

## Claims

1. A ceramic electronic component comprising:
an external electrode on an external surface of a ceramic body, the ceramic body containing 24 to 40 percent by weight of a ceramic composition and 60 to 76 percent by weight of a borosilicate glass, and the ceramic composition containing 10 to 14 percent by weight of an Al constituent in terms of Al₂O₃.

2. The ceramic electronic component according to claim 1, wherein the ceramic composition further contains 4.0 to 70.0 percent by weight of a Si constituent in terms of SiO₂ and 4.0 to 40.0 percent by weight of a Ba constituent in terms of BaO.

3. The ceramic electronic component according to claim 1 or 2, wherein the ceramic body further contains 0.5 to 3 percent by weight of a colorant with respect to the borosilicate glass.

4. The ceramic electronic component according to claim 3, wherein the colorant is a chromium oxide.

5. A process for producing a ceramic electronic component, comprising the steps of mixing a ceramic composition containing 10 to 14 percent by weight of an Al constituent in terms of Al₂O₃ with a borosilicate glass so as to prepare a ceramic premix containing 24 to 40 percent by weight of the ceramic composition and 60 to 76 percent by weight of the borosilicate glass; forming the ceramic premix into ceramic green sheets; forming a conductive pattern on at least one of the ceramic green sheets; laminating the ceramic green sheets to form a ceramic laminate; firing the ceramic laminate to form a ceramic body; and forming an external electrode on an external surface of the ceramic body.

6. The process for producing the ceramic electronic component according to claim 5, wherein the ceramic composition is prepared so as to contain 4.0 to 70.0 percent by weight of a Si constituent in terms of SiO₂ and 4.0 to 40.0 percent by weight of a Ba constituent in terms of BaO.

7. The process for producing the ceramic electronic component according to claim 5 or 6, further comprising a step of adding 0.5 to 3 percent by weight of a colorant to each ceramic green sheet with respect to the borosilicate glass.

8. The process for producing the ceramic electronic component according to any one of claims 5 to 7, wherein the colorant is a chromium oxide.
